# NEUE EUROPÄISCHE PATENTSCHRIFT

(11) **EP 2 389 554 B2**
(45) Veröffentlichungstag und Bekanntmachung des Hinweises auf die Entscheidung über den Einspruch: **13.05.2020**
(45) Hinweis auf die Patenterteilung: 09.01.2013
(21) Anmeldenummer: 10718138.0
(22) Anmeldetag: 28.04.2010
(51) Int. Cl.: F26B 1/00, F26B 3/28, F26B 9/10

(54) **VERFAHREN ZUR GLEICHZEITIGEN LAGERUNG UND TROCKNUNG VON KLÄRSCHLAMM**
METHOD FOR SIMULTANEOUS STORAGE AND DRYING OF SEWAGE SLUDGE
PROCÉDÉ DE STOCKAGE ET DE SÉCHAGE SIMULTANÉS DE BOUES D'ÉPURATION

(30) Priorität: 02.07.2009 DE 102009033028
(43) Veröffentlichungstag der Anmeldung: 30.11.2011
(73) Patentinhaber: TSP GmbH, 70794 Filderstadt-Bernhausen (DE)
(72) Erfinder: CONRAD, Tilo, 72622 Nürtingen (DE); RITTERBUSCH, Steffen, 70563 Stuttgart (DE); BUX, Markus, 72124 Pliezhausen (DE)
(74) Vertreter: Dr. Gassner & Partner mbB
(86) Internationale Anmeldenummer: PCT/EP2010/055747
(87) Internationale Veröffentlichungsnummer: WO 2011/000589

(56) Entgegenhaltungen:
- WO-A2-2008/052792
- DE-A1- 4 315 321
- DE-A1-102007 030 927
- FR-A1- 2 857 086
- US-A- 4 668 388
- Auszug einer Angebotsanforderung der Stadt Wyk a. Föhr vom 13.06.2008

## Beschreibung

Die Erfindung betrifft ein Verfahren zur gleichzeitigen Lagerung und Trocknung von Klärschlamm.

Die Verwertung von Klärschlamm in der Landwirtschaft findet wegen im Klärschlamm enthaltener Schadstoffe eine immer geringere Akzeptanz seitens der Öffentlichkeit, der Gesetzgeber und der Lebensmittelindustrie. Eine Trocknung des Klärschlamms ermöglicht weitere Verwertungsmöglichkeiten, wie z. B. die selbstständige Verbrennung.

Aus der WO 03/056263 A1 ist ein Verfahren bekannt, bei welchem Klärschlamm auf einer Fläche in einem den Treibhauseffekt ausnutzenden Gebäude getrocknet wird. Dabei wird der Klärschlamm auf die Fläche aufgebracht, nach dem Trocknen aus der Vorrichtung entnommen und, beispielsweise durch Verbrennung, entsorgt. Anschließend kann eine weitere Charge von zwischenzeitlich angefallenem und zwischengelagertem Klärschlamm auf der Fläche verteilt und getrocknet werden. Die Zwischenlagerung des Klärschlamms kann beispielsweise in Silos erfolgen. Ein Nachteil dieses Verfahrens besteht darin, dass es, insbesondere für kleine Kommunen mit weniger als zehntausend Einwohnern, verhältnismäßig aufwendig und damit teuer ist.

Die FR 2 857 086 A1 betrifft ein solares Trocknungsverfahren, bei dem das zu trocknende Material in aufeinanderfolgenden Schichten verteilt wird, wobei jede Schicht unmittelbar nach dem Verteilen mit den darunterliegenden Schichten vermischt wird. Die Trocknung kann dabei in einem automatisch belüfteten Gewächshaus erfolgen. Bei einer Trocknung von Schlamm kann die Trocknung mit einer Lagerung kombiniert sein.

Aufgabe der vorliegenden Erfindung ist es, ein alternatives Trocknungsverfahren bereitzustellen, welches kostengünstig durchzuführen ist und sich insbesondere für kleine Kommunen eignet.

Diese Aufgabe wird durch die Merkmale des Anspruchs 1 gelöst. Zweckmäßige Ausgestaltungen ergeben sich aus den Merkmalen der Ansprüche 2 bis 13.

Erfindungsgemäß ist ein Verfahren zur gleichzeitigen Lagerung und Trocknung von Klärschlamm mit folgenden Schritten vorgesehen:
a) mechanisches Entwässern des Klärschlamms bis zu einem Trockensubstanzgehalt von 10% bis 30%, bevorzugt 10% bis 25%, besonders bevorzugt 15% bis 20%,
b) Aufbringen des entwässerten Klärschlamms auf einen Boden einer gewächshausartigen Trocknungshalle mittels mindestens einer Pumpe, bei welcher der Boden von einer transparenten Gebäudehülle überdacht ist,
c) Trocknen des Klärschlamms unter Ausnutzung von in die Trocknungshalle einstrahlender Sonnenstrahlung,
d) mechanisches Entwässern von weiterem Klärschlamm bis zu einem Trockensubstanzgehalt von 10% bis 30%, bevorzugt 10% bis 25%, besonders bevorzugt 15% bis 20%,
e) Einbringen des entwässerten weiteren Klärschlamms in die Trocknungshalle mittels der mindestens einen Pumpe oder einer weiteren Pumpe und Vermischen des weiteren Klärschlamms mit dem in der Trocknungshalle bereits vorhandenen Klärschlamm,
f) Trocknen der dadurch entstandenen Mischung unter Ausnutzung von in die Trocknungshalle einstrahlender Sonnenstrahlung und
g) Ausräumen der Mischung aus der Trocknungshalle oder Wiederholen der Schritte d) bis f), wobei bei Schritt e) der weitere Klärschlamm mit der in der Trocknungshalle bereits vorhandenen Mischung statt mit dem in der Trocknungshalle bereits vorhandenen Klärschlamm vermischt wird, wobei das mechanische Entwässern weitgehend kontinuierlich erfolgt.

Die Besonderheit des erfindungsgemäßen Verfahrens besteht darin, dass mechanisch entwässerter Klärschlamm in einer gewächshausartigen Trocknungshalle mit dort bereits vorhandenem getrocknetem Klärschlamm vermischt wird und die dadurch entstehende Mischung dann getrocknet wird. Nach dem Trocknen steht die Mischung dann für ein erneutes Vermischen mit mechanisch entwässertem weiteren Klärschlamm zur Verfügung.

Unter "Trocknen" im Sinne der Erfindung wird auch ein teilweises Trocknen verstanden. Der in der Trocknungshalle bereits vorhandenen Klärschlamm gemäß Schritt e) und die in der Trocknungshalle bereits vorhandenen Mischung gemäß Schritt g) können daher in vollständig oder teilweise getrockneter Form vorliegen.

Der "Klärschlamm" und der "weitere Klärschlamm" müssen sich in der Zusammensetzung und der Herkunft nicht unterscheiden. Die unterschiedlichen Bezeichnungen wurden lediglich gewählt, um den zuerst eingebrachten Klärschlamm vom später eingebrachten Klärschlamm zu unterscheiden.

Der Klärschlamm und der weitere Klärschlamm stammen aus einer Kläranlage und werden von dort ohne Zwischenlagerung direkt bei Schritt a) und/oder d) in das Verfahren eingebracht. Durch das erfindungsgemäße Verfahren wird der in der Kläranlage anfallende Klärschlamm direkt, d. h. ohne eine Zwischenlagerung, so wie er anfällt mechanisch entwässert und dann in der Trocknungshalle getrocknet. Es ist nicht erforderlich, Anlagen zur Zwischenlagerung des Klärschlamms, insbesondere Silos vorzusehen. Darüber hinaus kann durch die, insbesondere kontinuierlich erfolgende, mechanische Entwässerung des Klärschlamms, so wie er in der Kläranlage anfällt, das stoßweise Anfallen großer Mengen an Filtratwasser, wie es beispielsweise beim mechanischen Entwässern des Inhalts eines Silos der Fall wäre, vermieden werden.

Dadurch ist es auch nicht erforderlich, Pufferbehälter zur Aufnahme des Filtratwassers vorzusehen. Weiterhin kann die Anlage zum mechanischen Entwässern des Klärschlamms verhältnismäßig unaufwändig und klein ausgelegt werden, weil sie jeweils nur eine verhältnismäßig geringe Menge an Klärschlamm entwässern muss.

Die Erfinder haben festgestellt, dass durch das Vermischen mit dem bereits vorgetrockneten Klärschlamm oder der bereits vorgetrockneten Mischung sehr effizient die Entstehung unangenehmer Gerüche vermieden wird. Durch die in dem Klärschlamm und dem weiteren Klärschlamm vorhandenen Mikroorganismen erfolgt während der Trocknung eine Nachstabilisierung des Klärschlamms. Bei den Mikroorganismen handelt es sich um Mikroorganismen aus dem Belebungsbecken der Kläranlage.

Weiterhin haben die Erfinder festgestellt, dass bei Durchführung des erfindungsgemäßen Verfahrens neben der Trocknung eine Hygienisierung des Klärschlamms bzw. der Mischung stattfindet. Die Erfinder vermuten, dass dies erfolgt, weil der Klärschlamm und die Mischung über einen längeren Zeitraum in der Trocknungshalle verbleiben und es durch den Tag-Nacht-Rhythmus sowie witterungsbedingt permanent zu Temperaturschwankungen kommt. Einen weiteren Beitrag zur Hygienisierung leistet vermutlich die Sonneneinstrahlung.

Das erfindungsgemäße Verfahren erlaubt eine weitgehend kontinuierliche Trocknung des anfallenden Klärschlamms. Das Ausräumen der Mischung aus der Trocknungshalle erfolgt nur einmal pro Jahr. Dazu kann das Einbringen weiteren Klärschlamms für einige Tage, beispielsweise 20 Tage im Sommer, unterbrochen werden, bis die Mischung den gewünschten Trocknungsgrad erreicht hat. Nach dem Ausräumen der Mischung aus der Trocknungshalle steht diese dann für eine erneute Durchführung des Verfahrens bereit. Das Ausräumen der Mischung aus der Trocknungshalle kann beispielsweise mittels eines Radladers erfolgen. Bei einem nur einmal jährlich erfolgenden Ausräumen der Mischung aus der Trocknungshalle kann auf das dauerhafte Vorhalten eines eigenen Radladers zum Ausräumen verzichtet werden. Auch dadurch kann der finanzielle Aufwand zur Durchführung des Verfahrens gering gehalten werden. Dies ist insbesondere für kleinere Kommunen von Bedeutung. Darüber hinaus ist die Trocknung durch die Ausnutzung der Sonneneinstrahlung in die Trocknungshalle unabhängig von Energiepreisschwankungen, so dass die Kosten für die Trocknung langfristig konstant gering bleiben.

Vorzugsweise wird der Klärschlamm und/oder der weitere Klärschlamm nach und/oder während Schritt b) und/oder Schritt e) auf dem Boden oder auf dem vorhandenen Klärschlamm oder der vorhandenen Mischung verteilt. Das Verteilen kann beispielsweise mittels einer oberhalb des Bodens an einem verfahrbaren Träger angeordneten Fördereinrichtung erfolgen. Bei der Fördereinrichtung kann es sich z.B. um eine sich quer über den Boden erstreckende Förderwalze handeln, wie sie z. B. aus der DE 43 15 321 A1 bekannt ist.

Alternativ kann die Fördereinrichtung an dem Träger, beispielsweise mittels einer Laufkatze, verfahrbar angeordnet sein. Die Fördereinrichtung ist dabei so ausgestaltet, dass sie über jeden Teil des Bodens bewegt werden kann. Dazu kann sich der Träger einmal quer über den gesamten Boden der Trocknungshalle erstrecken und in beidseits längs des Bodens angeordneten Schienen verfahrbar sein. Darüber hinaus kann an dem Träger oder der Fördereinrichtung eine Einrichtung vorgesehen sein, mittels welcher der Abstand zwischen der Fördereinrichtung und dem Boden, insbesondere in Abhängigkeit vom von einem Sensor ermittelten Abstand zwischen der Fördereinrichtung und dem Boden, verstellt werden kann. Eine solche Fördereinrichtung ist z. B. aus der WO 03/056263 A1 bekannt. Mittels einer derartigen Fördereinrichtung kann beispielsweise nur an einer Stelle aufgebrachter Klärschlamm oder weiterer Klärschlamm über den gesamten Boden oder über die gesamte Mischung verteilt werden. Nach dem Trocknen kann die Fördereinrichtung auch dazu verwendet werden, die Mischung aus der Trocknungshalle hinaus zu befördern oder in einem Bereich oder einer Stelle des Bodens aufzuhäufen. Darüber hinaus ist mittels einer derartigen Fördereinrichtung ein automatisiertes Durchführen des erfindungsgemäßen Verfahrens möglich.

Durch das, insbesondere gleichmäßige, Verteilen auf dem Boden oder der Mischung wird die Trocknung beschleunigt und die Trocknungsleistung bei einer vorgegebenen Bodenfläche erhöht. Ist der Klärschlamm oder der weitere Klärschlamm jedoch sehr dünnflüssig, ist insbesondere bei oder nach Schritt b) und/oder e), und besonders bei einem Aufbringen oder Einbringen an mehreren Stellen des Bodens, ein Verteilen nicht erforderlich, weil sich der Klärschlamm oder der weitere Klärschlamm durch Fließen selbstständig auf dem Boden oder der Mischung verteilt.

Der Klärschlamm und die Mischung werden während der Schritte c) und f), insbesondere mittels einer selbstfahrenden Wendevorrichtung oder mittels einer/der oberhalb des Bodens an einem/dem verfahrbaren Träger, bevorzugt verfahrbar, angeordneten Fördereinrichtung, vorzugsweise in Abhängigkeit von Witterungsbedingungen und/oder von dem Feuchtigkeitsgehalt des Klärschlamms oder der Mischung, gewendet und dadurch belüftet. Bei der selbstfahrenden Wendevorrichtung kann es sich beispielsweise um das von der Anmelderin vertriebene "elektrische Schwein" handeln. Durch das Belüften wird das Wachstum aerober Mikroorganismen und dadurch eine aerober Nachstabilisierung des Klärschlamms erreicht.

Bei einer Ausgestaltung des erfindungsgemäßen Verfahrens erfolgt das Vermischen gemäß Schritt e) und/oder g) mittels einer/der selbstfahrenden Wendevorrichtung oder mittels einer/der oberhalb des Bodens an einem/dem verfahrbaren Träger, bevorzugt verfahrbar, angeordneten Fördereinrichtung. Das erlaubt eine weitere Automatisierung des Verfahrens.

Die Schritte d) bis f) werden bei Schritt g) mindestens fünf Mal, insbesondere mindestens zehn Mal, vorzugsweise mindestens 20 Mal, besonders bevorzugt mindestens 40 Mal, wiederholt, bevor die Mischung aus der Trocknungshalle ausgeräumt wird. Die Mischung kann vor dem Ausräumen gemäß Schritt g) bei Schritt f) solange getrocknet werden, bis sie einen Trockensubstanzgehalt von mindestens 70%, insbesondere mindestens 85%, bevorzugt mindestens 90%, aufweist. Eine solche Mischung kann im Gegensatz zu feuchtem Klärschlamm ohne Zuheizen mit weiteren Brennstoffen, beispielsweise in einem Kraftwerk oder einem Zementwerk, verbrannt werden. Sie hat einen Heizwert, der in etwa dem von Rohbraunkohle entspricht. Aus der Asche der Mischung kann Phosphat gewonnen werden.

Das Ausräumen der Mischung erfolgt nur einmal pro Jahr. Dadurch gleichen sich kurzfristige Witterungsschwankungen weitgehend aus, so dass nach jeweils einem Jahr stets mit einem etwa gleichen Trockensubstanzgehalt der Mischung gerechnet werden kann. Darüber hinaus ist durch das nur einmal jährlich erfolgende Ausräumen eine Zwischenlagerung von nassem Klärschlamm und, sofern das Ausräumen nicht automatisiert erfolgt, das dauerhafte Vorhalten eines dazu geeigneten Geräts, beispielsweise eines Radladers, nicht erforderlich. Ein solches Gerät kann kurzfristig für das Ausräumen gemietet werden, so dass dadurch die Kosten des Verfahrens weiter gesenkt werden können.

Vorzugsweise ist im Boden mindestens eine Öffnung vorhanden, durch welche das Aufbringen des Klärschlamms gemäß Schritt b) und das Einbringen des weiteren Klärschlamms gemäß Schritt e) erfolgt. Dazu kann der Klärschlamm nach dem mechanischen Entwässern mittels mindestens einer Pumpe durch die Öffnung gedrückt werden. Bereits dadurch kann, insbesondere beim Vorhandensein mehrerer Öffnungen und/oder bei eher dünnflüssigem Klärschlamm bzw. weiterem Klärschlamm, der Klärschlamm auf dem Boden und/oder der weitere Klärschlamm auf dem vorhandenen Klärschlamm bzw. der vorhandenen Mischung verteilt werden.

Alternativ oder zusätzlich kann das Aufbringen des Klärschlamms gemäß Schritt b) und das Einbringen des weiteren Klärschlamms gemäß Schritt e) auch von oben erfolgen. Dazu kann beispielsweise ein oberhalb des Bodens angeordneter Bandförderer oder Schneckenförderer oder eine oberhalb des Bodens endende und mittels einer Pumpe oder einer weiteren Pumpe mit dem Klärschlamm oder dem weiteren Klärschlamm versorgte Leitung vorgesehen sein.

Vorzugsweise erfolgt das Ausräumen mittels einer/der oberhalb des Bodens an einem/dem verfahrbaren Träger, bevorzugt verfahrbar, angeordneten Fördereinrichtung. Besonders vorteilhaft ist es, wenn die Mischung beim Ausräumen in eine im Boden vorhandene Vertiefung befördert wird, aus der die Mischung durch eine weitere Fördereinrichtung aus der Trocknungshalle hinaus befördert wird. Durch diese Maßnahmen kann das Verfahren vollständig automatisiert werden.

Vorzugsweise wird die Trocknungshalle mittels mindestens einem Ventilator belüftet. Dadurch ist die Trocknung unabhängiger von witterungsbedingten Luftströmungen und wird beschleunigt. Weiterhin kann das Trocknen des Klärschlamms gemäß Schritt c) und/oder der Mischung gemäß Schritt f) durch das Erzeugen mindestens eines auf den Klärschlamm und/oder der Mischung auftreffenden Luftstroms unterstützt werden. Dies kann beispielsweise durch im oberen Bereich der Trocknungshalle angeordnete Ventilatoren erfolgen, welche einen auf den Klärschlamm bzw. die Mischung gerichteten Luftstrom erzeugen.

Weiterhin kann das Trocknen des Klärschlamms gemäß Schritt c) und/oder der Mischung gemäß Schritt f) durch eine zusätzliche Erwärmung des Klärschlamms oder der Mischung, insbesondere durch Abwärme, unterstützt werden. Die Abwärme kann dabei beispielsweise aus einem Blockheizkraftwerk, aus der Klärschlammverbrennung, der Klärschlammvergasung, einer Wärmepumpe oder einem sonstigen, insbesondere biotechnologischen oder chemischen, Wärme erzeugenden Prozess stammen. Durch die zusätzliche Verwendung von Abwärme kann die Trocknungsleistung auf einer gegebenen Fläche weiter gesteigert werden.

Besonders bevorzugt ist es, wenn das gesamte Verfahren automatisiert, fernüberwacht und/oder ferngesteuert durchgeführt wird. Die die Anlage betreibende Kommune muss dadurch keine Fachkräfte zum Betrieb der Anlage bereitstellen und kann dadurch weitere Kosten sparen.

Die Durchführung des erfindungsgemäßen Verfahrens kann mit einer Vorrichtung erfolgen, wobei die Vorrichtung folgende Komponenten aufweist:
- Aggregat zum mechanischen Entwässern des Klärschlamms und des weiteren Klärschlamms,
- gewächshausartige Trocknungshalle mit einem von einer transparenten Gebäudehülle überdachten Boden,
- Pumpe zum Aufbringen des entwässerten Klärschlamms auf den Boden und/oder zum Einbringen des entwässerten weiteren Klärschlamms in die Trocknungshalle,
- Fördereinrichtung und
- Wendevorrichtung.

Der Boden kann von einer Umgrenzung umgeben sein, die von dem Klärschlamm, dem weiteren Klärschlamm und der Mischung während der Durchführung des erfindungsgemäßen Verfahrens außer beim Ausräumen der Mischung aus der Trocknungshalle nicht durchdrungen werden kann. Zum Ausräumen kann eine verschließbare Öffnung, beispielsweise in Form einer verschließbaren Spundwand, in der Umgrenzung vorgesehen sein. Bei der Umgrenzung kann es sich beispielsweise um eine Mauer handeln. Die Umgrenzung ermöglicht ein höheres Aufschichten des Klärschlamms, des weiteren Klärschlamms und der Mischung auf dem Boden.

Nachfolgend wird die Erfindung anhand eines Ausführungsbeispiels und einer Zeichnung näher erläutert.

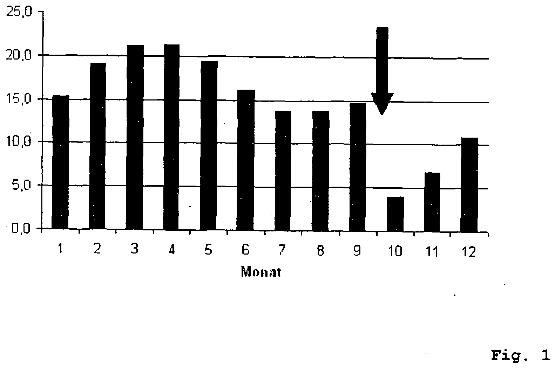

- Fig. 1 zeigt: eine graphische Darstellung der durchschnittlichen Klärschlammpegel in einer gewächshausartigen Trocknungshalle bei Durchführung des erfindungsgemäßen Verfahrens über einen Zeitraum von 12 Monaten.

Bei einer Kommune in Süddeutschland mit einer etwa 5000 Einwohnerwerte verarbeitenden Kläranlage fallen pro Jahr etwa 3000 t Klärschlamm mit einem Trockensubstanzgehalt von etwa 3% an. Diese Menge entspricht einem Volumen von 8,2 m³ pro Tag bzw. 0,35 m³/h.

Eine erfindungsgemäße Vorrichtung weist einen 750 m² großen und von einer wasserdichten Bodenplatte aus Beton gebildeten Boden auf. Der Boden ist von einer etwa 1 m hohen Umgrenzung in Form einer Mauer aus Beton umgeben, die eine beim Trocknen von einer mobilen Spundwand verschlossene Zufahrtsöffnung aufweist. Der Boden ist von einer gewächshausartigen Trocknungshalle mit vorwiegend aus Glas bestehender transparenter Gebäudehülle überdacht, die zum Luftaustausch mit der Umgebung Lüftungsklappen aufweist.

Beginnend im Oktober werden von Montag bis Samstag kontinuierlich 0,35 m³/h des von der Kläranlage stammenden Klärschlamms zu einem Aggregat zum mechanischen Entwässern des Klärschlamms gepumpt und dort bis auf einen Trockensubstanzgehalt von etwa 15 % entwässert. Dabei fallen pro Stunde etwa 0,07 t entwässerter Klärschlamm und etwa 0,28 t Filtrat an. Das Filtrat wird in die Kläranlage zurückgepumpt. Durch das weitgehend kontinuierliche Entwässern des Klärschlamms wird das stoßweise Anfallen großer Mengen des Filtrats vermieden.

Der entwässerte Klärschlamm wird direkt durch drei Leitungen, die jeweils in einer Öffnung im Boden münden, von unten her in die erfindungsgemäße Vorrichtung gepumpt. Dabei regelt ein automatisches Ventil, durch welche der drei Leitungen und damit auch durch welche der Öffnungen der Klärschlamm auf den Boden der Vorrichtung geleitet wird. In der Vorrichtung wird der Klärschlamm von oben mit Luft angeblasen. Dazu ist über jeder der Öffnungen ein Ventilator angeordnet.

Eine von der Anmelderin unter der Bezeichnung "elektrisches Schwein" vertriebene selbstfahrenden Wendevorrichtung fährt zwischen 5 und 12 Stunden pro Tag auf dem Boden umher. Dabei verteilt sie den Klärschlamm, der im Bereich der Öffnungen Kegel bildet, automatisch auf dem Boden. Dabei werden die Kegel abgebaut und weiterer aus den Öffnungen tretender Klärschlamm wird mit bereits auf dem Boden vorhandenen und zumindest teilweise getrocknetem Klärschlamm vermischt. Das Vermischen erfolgt unter anderem dadurch, dass der Klärschlamm solange er sehr feucht ist, klebrig ist und dadurch an im elektrischen Schwein vorhandenen Wendewerkzeugen hängen bleibt. Dadurch wird er in andere Bereiche mitgenommen und dort mit dem zumindest teilweise getrockneten Klärschlamm vermischt. Durch das elektrische Schwein wird ein in der gesamten Vorrichtung außer im Bereich der Öffnungen etwa gleich hoher Klärschlammpegel erreicht.

Durch den beim Trocknen des Klärschlamms erfolgenden Wasserentzug nimmt dessen Volumen ab. Im Winter nimmt der Klärschlammpegel in der Vorrichtung zu, weil die Volumenverringerung durch das Verdunsten von Wasser geringer ist als die Volumenzunahme durch das Einbringen weiteren Klärschlamms. Im Sommer ist es umgekehrt. Der maximale Klärschlammpegel wird im Frühjahr erreicht. Er kann bis zu 25 cm betragen.

Fig. 1 zeigt eine graphische Darstellung der durchschnittlichen Klärschlammpegel in der Trocknungshalle bei Durchführung des erfindungsgemäßen Verfahrens. Auf der X-Achse sind dabei die durch Nummern bezeichneten Monate und auf der Y-Achse die durchschnittlichen Klärschlammpegel, gemessen in cm, aufgetragen. Der Pfeil zeigt den Tag des Ausräumens des getrockneten Klärschlamms aus der Trocknungshalle an.

Vom 14. bis 30. September wird kein weiterer Klärschlamm in die Trocknungshalle eingebracht. In dieser Zeit trocknet der gesamte in der Trocknungshalle vorhandene Klärschlamm bis zu einem Trockensubstanzgehalt von etwa 90 %. Nach dem Trocknen verbleiben etwa 100 t Klärschlamm.

Am 1. Oktober wird die mobile Spundwand entfernt und der getrocknete Klärschlamm mittels eines Radladers aus der Trocknungshalle geräumt. Am 2. Oktober beginnt das Verfahren mit dem Aufbringen entwässerten Klärschlamms auf den Boden erneut.

Während des gesamten Verfahrens wird die Steuerung des automatischen Ventils, der Ventilatoren, der selbstfahrenden Wendevorrichtung und der Stellung der Lüftungsklappen von einer speicherprogrammierbaren Steuerung gesteuert.

## Patentansprüche

1. Verfahren zur gleichzeitigen Lagerung und Trocknung von Klärschlamm mit folgenden Schritten:
a) mechanisches Entwässern des Klärschlamms bis zu einem Trockensubstanzgehalt von 10% bis 30%,
b) Aufbringen des entwässerten Klärschlamms auf einen Boden einer gewächshausartigen Trocknungshalle mittels mindestens einer Pumpe, bei welcher der Boden von einer transparenten Gebäudehülle überdacht ist,
c) Trocknen des Klärschlamms unter Ausnutzung von in die Trocknungshalle einstrahlender Sonnenstrahlung,
d) mechanisches Entwässern von weiterem Klärschlamm bis zu einem Trockensubstanzgehalt von 10% bis 30%,
e) Einbringen des entwässerten weiteren Klärschlamms in die Trocknungshalle mittels der mindestens einen Pumpe oder einer weiteren Pumpe und Vermischen des weiteren Klärschlamms mit dem in der Trocknungshalle bereits vorhandenen Klärschlamm,
f) Trocknen der dadurch entstandenen Mischung unter Ausnutzung von in die Trocknungshalle einstrahlender Sonnenstrahlung und
g) Ausräumen der Mischung aus der Trocknungshalle oder Wiederholen der Schritte d) bis f), wobei bei Schritt e) der weitere Klärschlamm mit der in der Trocknungshalle bereits vorhandenen Mischung statt mit dem in der Trocknungshalle bereits vorhandenen Klärschlamm vermischt wird,
wobei der Klärschlamm und der weitere Klärschlamm aus einer Kläranlage stammen und von dort, so wie sie in der Kläranlage anfallen, ohne Zwischenlagerung direkt bei Schritt a) und/oder d) in das Verfahren eingebracht werden, wobei das mechanische Entwässern weitgehend kontinuierlich erfolgt, wobei bei Schritt g) die Schritte d) bis f) mindestens 5 Mal wiederholt werden, bevor die Mischung aus der Trocknungshalle ausgeräumt wird, wobei das Ausräumen der Mischung nur einmal pro Jahr erfolgt, wobei im Klärschlamm und im weiteren Klärschlamm Mikroorganismen aus einem Belebungsbecken der Kläranlage vorhanden sind, durch die während der Trocknung eine Nachstabilisierung erfolgt, wobei der Klärschlamm und die Mischung während der Schritte c) und f) gewendet und dadurch belüftet wird.

2. Verfahren nach Anspruch 1, wobei der Klärschlamm und/oder der weitere Klärschlamm nach und/oder während Schritt b) und/oder Schritt e) auf dem Boden oder auf dem vorhandenen Klärschlamm oder der vorhandenen Mischung, insbesondere mittels einer oberhalb des Bodens an einem verfahrbaren Träger, bevorzugt verfahrbar, angeordneten Fördereinrichtung, verteilt wird.

3. Verfahren nach Anspruch 1 oder 2, wobei der Klärschlamm und die Mischung während der Schritte c) und f) mittels einer selbstfahrenden Wendevorrichtung oder mittels einer/der oberhalb des Bodens an einem/dem verfahrbaren Träger, bevorzugt verfahrbar, angeordneten Fördereinrichtung, vorzugsweise in Abhängigkeit von Witterungsbedingungen und/oder von dem Feuchtigkeitsgehalt des Klärschlamms oder der Mischung, gewendet und dadurch belüftet wird.

4. Verfahren nach einem der vorherigen Ansprüche, wobei das Vermischen gemäß Schritt e) und/oder g) mittels einer/der selbstfahrenden Wendevorrichtung oder mittels einer/der oberhalb des Bodens an einem/dem verfahrbaren Träger, bevorzugt verfahrbar, angeordneten Fördereinrichtung erfolgt.

5. Verfahren nach einem der vorherigen Ansprüche, wobei bei Schritt g) die Schritte d) bis f) mindestens 10 Mal, vorzugsweise mindestens 20 Mal, besonders bevorzugt mindestens 40 Mal, wiederholt werden, bevor die Mischung aus der Trocknungshalle ausgeräumt wird.

6. Verfahren nach einem der vorherigen Ansprüche, wobei die Mischung vor dem Ausräumen gemäß Schritt g) bei Schritt f) solange getrocknet wird, bis sie einen Trockensubstanzgehalt von mindestens 70%, insbesondere mindestens 85%, bevorzugt mindestens 90%, aufweist.

7. Verfahren nach einem der vorherigen Ansprüche, wobei das Aufbringen des Klärschlamms gemäß Schritt b) und das Einbringen des weiteren Klärschlamms gemäß Schritt e) durch mindestens eine im Boden vorhandene Öffnung erfolgt.

8. Verfahren nach einem der vorherigen Ansprüche, wobei das Ausräumen mittels einer/der oberhalb des Bodens an einem/dem verfahrbaren Träger, bevorzugt verfahrbar, angeordneten Fördereinrichtung erfolgt.

9. Verfahren nach einem der vorherigen Ansprüche, wobei die Mischung beim Ausräumen in eine im Boden vorhandene Vertiefung befördert wird, aus der die Mischung durch eine weitere Fördereinrichtung aus der Trocknungshalle hinaus befördert wird.

10. Verfahren nach einem der vorherigen Ansprüche, wobei die Trocknungshalle mittels mindestens einem Ventilator belüftet wird.

11. Verfahren nach einem der vorherigen Ansprüche, wobei das Trocknen des Klärschlamms gemäß Schritt c) und/oder der Mischung gemäß Schritt f) durch das Erzeugen mindestens eines auf den Klärschlamm und/oder der Mischung auftreffenden Luftstroms unterstützt wird.

12. Verfahren nach einem der vorherigen Ansprüche, wobei das Trocknen des Klärschlamms gemäß Schritt c) und/oder der Mischung gemäß Schritt f) durch eine zusätzliche Erwärmung des Klärschlamms oder der Mischung, insbesondere durch Abwärme, unterstützt wird.

13. Verfahren nach einem der vorherigen Ansprüche, wobei das gesamte Verfahren automatisiert, fernüberwacht und/oder ferngesteuert durchgeführt wird.

## Claims

1. A method for the simultaneous storage and drying of sewage sludge comprising the following steps:
a) Mechanically dehydrating the sewage sludge to a dry mass content of 10% to 30%,
b) Applying the dehydrated sewage sludge by means of at least one pump to the floor of a greenhouse-like drying hall, the floor of which is roofed by a transparent building shell,
c) Drying the sewage sludge utilizing solar radiation that radiates into the drying hall,
d) Mechanically dehydrating additional sewage sludge to a dry mass content of 10% to 30%,
e) Introducing the dehydrated additional sewage sludge, by means of the at least one pump or one additional pump, into the drying hall and mixing the additional sewage sludge with the sewage sludge that is already present in the drying hall,
f) Drying the resulting mixture utilizing solar radiation that radiates into the drying hall, and
g) Clearing the mixture out of the drying hall or repeating steps d) to f), wherein in step e) the additional sewage sludge is mixed with the mixture that is already present in the drying hall, rather than with the sewage sludge that is already present in the drying hall, wherein the sewage sludge and the additional sewage sludge are provided by a sewage treatment plant and are introduced into the process from there as they are collected in the sewage treatment plant, without intermediate storage, directly into step a) and/or d), wherein the mechanical dehydration is carried out largely continuously, wherein in step g), steps d) to f) are repeated at least 5 times before the mixture is cleared out of the drying hall,
wherein the mixture is cleared out only once per year, wherein microorganisms from an aeration basin of the sewage treatment plant are present in the sewage sludge and in the additional sewage sludge, by which microorganisms a post-stabilization occurs during drying, wherein the sewage sludge and the mixture are turned and thereby aerated during steps c) and f).

2. The method according to claim 1, wherein the sewage sludge and/or the additional sewage sludge is distributed after and/or during step b) and/or step e) onto the floor or onto the present sewage sludge or the present mixture, particularly by means of a conveyor apparatus that is arranged, preferably movably, above the floor at a movable carrier.

3. The method according to claim 1 or 2, wherein the sewage sludge and the mixture are turned and thereby aerated during steps c) and f), preferably depending on weather conditions and/or the moisture content of the sewage sludge or the mixture, and by means of a self-propelled turning device or by means of a/the conveyor apparatus arranged, preferably movably, above the floor at a/the movable carrier.

4. The method according to any one of the preceding claims, wherein the mixing according to step e) and/or g) is carried out by means of a/the self-propelled turning device or by means of a/the conveyor apparatus arranged, preferably movably, above the floor at a/the movable carrier.

5. The method according to any one of the preceding claims, wherein in step g), steps d) to f) are repeated at least 10 times, preferably at least 20 times, particularly preferably at least 40 times, before the mixture is cleared out of the drying hall.

6. The method according to any one of the preceding claims, wherein before the mixture is cleared out according to step g), it is dried in step f) until it reaches a dry mass content of at least 70%, particularly at least 85%, preferably at least 90%.

7. The method according to any one of the preceding claims, wherein the application of the sewage sludge according to step b) and the introduction of the additional sewage sludge according to step e) is carried out through at least one opening that is present in the floor.

8. The method according to any one of the preceding claims, wherein the clearing out is carried out by means of a/the conveyor apparatus arranged, preferably movably, above the floor at a/the movable carrier.

9. The method according to any one of the preceding claims, wherein as the mixture is being cleared out, it is transported to a depression that is provided in the floor, from which the mixture is transported out of the drying hall by an additional conveyor apparatus.

10. The method according to any one of the preceding claims, wherein the drying hall is ventilated by means of at least one ventilator.

11. The method according to any one of the preceding claims, wherein the drying of the sewage sludge according to step c) and/or of the mixture according to step f) is supported by the generation of at least one air current that strikes the sewage sludge and/or the mixture.

12. The method according to any one of the preceding claims, wherein the drying of the sewage sludge according to step c) and/or of the mixture according to step f) is supported by an additional heating of the sewage sludge or of the mixture, particularly by waste heat.

13. The method according to any one of the preceding claims, wherein the entire process is automated, remotely monitored and/or remotely controlled.

## Revendications

1. Procédé de stockage et de séchage simultanés de boues d'épuration présentant les étapes suivantes :
a) déshydratation mécanique des boues d'épuration jusqu'à une teneur en substance sèche de 10 % à 30 %,
b) épandage des boues d'épuration déshydratées sur un sol d'un hall de séchage du genre serre au moyen d'au moins une pompe, le sol dudit hall de séchage étant couvert par une enveloppe de bâtiment transparente,
c) séchage des boues d'épuration en utilisant le rayonnement solaire qui pénètre dans le hall de séchage,
d) déshydratation mécanique d'autres boues d'épuration jusqu'à une teneur en substance sèche de 10 % à 30 %,
e) introduction des autres boues d'épuration déshydratées dans le hall de séchage au moyen de ladite au moins une pompe ou d'une autre pompe et mélange des autres boues d'épuration avec les boues d'épuration déjà présentes dans le hall de séchage,
f) séchage du mélange résultant en utilisant le rayonnement solaire qui pénètre dans le hall de séchage et
g) évacuation du mélange du hall de séchage ou répétition des étapes d) à f), les autres boues d'épuration étant mélangées à l'étape e) avec le mélange déjà présent dans le hall de séchage au lieu des boues d'épuration déjà présentes dans le hall de séchage,
dans lequel les boues d'épuration et les autres boues d'épuration proviennent d'une station d'épuration et sont introduites de celle-ci, telles qu'elles sont produites dans la station d'épuration, dans le procédé directement, sans stockage intermédiaire, à l'étape a) et/ou d), dans lequel la déshydratation mécanique est effectuée de manière en grande partie continue, dans lequel à l'étape g), les étapes d) à f) sont répétées au moins 5 fois avant que le mélange ne soit évacué du hall de séchage, dans lequel l'évacuation du mélange n'a lieu qu'une fois par an, dans lequel des microorganismes provenant d'un bassin d'activation de la station d'épuration sont présents dans les boues d'épuration et dans les autres boues d'épuration, grâce auxquels une stabilisation ultérieure a lieu pendant le séchage, dans lequel pendant les étapes c) et f), les boues d'épuration et le mélange sont retournés et de ce fait aérés.

2. Procédé selon la revendication 1, dans lequel, après et/ou pendant l'étape b) et/ou l'étape e), les boues d'épuration et/ou les autres boues d'épuration sont réparties sur le sol ou sur les boues d'épuration présentes ou sur le mélange présent, en particulier au moyen d'un dispositif de transport disposé au-dessus du sol, de préférence de manière déplaçable, sur un support déplaçable.

3. Procédé selon la revendication 1 ou 2, dans lequel, pendant les étapes c) et f), les boues d'épuration et le mélange sont retournés, et de ce fait aérés, au moyen d'un dispositif de retournement automoteur ou au moyen d'un/du dispositif de transport disposé au-dessus du sol, de préférence de manière déplaçable, sur un/le support déplaçable, de préférence en fonction des conditions atmosphériques et/ou de la teneur en humidité des boues d'épuration ou du mélange.

4. Procédé selon une des revendications précédentes, dans lequel le mélange selon l'étape e) et/ou g) est effectué au moyen d'un/du dispositif de retournement automoteur ou au moyen d'un/du dispositif de transport disposé au-dessus du sol, de préférence de manière déplaçable, sur un/le support déplaçable.

5. Procédé selon une des revendications précédentes, dans lequel, à l'étape g), les étapes d) à f) sont répétées au moins 10 fois, de préférence au moins 20 fois, particulièrement de préférence au moins 40 fois avant que le mélange ne soit évacué du hall de séchage.

6. Procédé selon une des revendications précédentes, dans lequel le mélange avant l'évacuation selon l'étape g) est séché à l'étape f) jusqu'à ce qu'il présente une teneur en substance sèche d'au moins 70 %, en particulier d'au moins 85 %, de préférence d'au moins 90 %.

7. Procédé selon une des revendications précédentes, dans lequel l'épandage des boues d'épuration selon l'étape b) et l'introduction des autres boues d'épuration selon l'étape e) ont lieu à travers au moins une ouverture présente dans le sol.

8. Procédé selon une des revendications précédentes, dans lequel l'évacuation est effectuée au moyen d'un/du dispositif de transport disposé au-dessus du sol, de préférence de manière déplaçable, sur un/le support déplaçable.

9. Procédé selon une des revendications précédentes, dans lequel, lors de l'évacuation, le mélange est transporté dans une dépression présente dans le sol, depuis laquelle le mélange est transporté hors du hall de séchage par un autre dispositif de transport.

10. Procédé selon une des revendications précédentes, dans lequel le hall de séchage est ventilé au moyen d'au moins un ventilateur.

11. Procédé selon une des revendications précédentes, dans lequel le séchage des boues d'épuration selon l'étape c) et/ou du mélange selon l'étape f) est assisté par la production d'au moins un courant d'air arrivant sur les boues d'épuration et/ou le mélange.

12. Procédé selon une des revendications précédentes, dans lequel le séchage des boues d'épuration selon l'étape c) et/ou du mélange selon l'étape f) est assisté par un réchauffement supplémentaire des boues d'épuration ou du mélange, en particulier par chaleur perdue.

13. Procédé selon une des revendications précédentes, dans lequel tout le procédé est automatisé, surveillé à distance et/ou commandé à distance.
